# EUROPEAN PATENT APPLICATION

(11) **EP 4 647 834 A1**
(43) Date of publication of application: **12.11.2025**
(21) Application number: 24174414.3
(22) Date of filing: 07.05.2024
(51) Int. Cl.: G02F 1/35, G02B 6/02, G02F 1/365

(54) **SYSTEM FOR SUPERCONTINUUM GENERATION**

(71) Applicant: Menlo Systems GmbH, 82152 Martinsried (DE)
(72) Inventor: Steinmetz, Tilo, 80809 München (DE); Holzwarth, Ronald, 82194 Gröbenzell (DE); Wu, Yuanjie, 81241 München (DE)
(74) Representative: Grünecker Patent- und Rechtsanwälte PartG mbB

(57) **Abstract**

The present invention pertains to a system (16) for generating a supercontinuum. This system (16) comprises a frequency comb generator (15) and a waveguide structure (9) coupled to the frequency comb generator (15). This waveguide structure (9) comprises distinct sections: an untapered input section (1) with specified first cross-sectional outer dimensions (8, 8a, 8b), a down-taper transition section (2) leading to a taper waist section (3) with second cross-sectional outer dimensions (7, 7a, 7b) that are smaller than the first cross-sectional outer dimensions (8, 8a, 8b), followed by an up-taper transition section (4) extending to an untapered output section (5) which reverts to third cross-sectional outer dimensions (6, 6a, 6b) that are larger than the second cross-sectional outer dimensions (7, 7a, 7b). These sections (1, 2, 3, 4, 5) are meticulously configured to exhibit distinct dispersion regimes, essential for efficient supercontinuum generation. A key aspect of the present invention is the precise calibration of the tapering process. This calibration ensures the elimination of an anomalous dispersion regime in the taper waist section (3), crucial for achieving a flat and coherent supercontinuum spectrum.

## Description

### Technical Field

The present invention relates to the technical field of photonics and waveguide technology, specifically focusing on systems for generating supercontinua. This technology is pertinent to diverse applications such as optical communications, spectroscopy, signal processing, and metrology. The invention addresses the challenges associated with producing wide and consistent spectral ranges in waveguide systems, which is crucial for enhancing the efficiency and effectiveness of optical systems in scientific, industrial, and telecommunications applications.

### Background Art

Supercontinuum generation, a process of producing broadband light spectra, has seen significant advancements due to its wide-ranging applications in fields such as metrology, spectroscopy, biology, spectrograph calibration, and telecommunications. The conventional approach to achieving supercontinuum often involves the use of waveguide structures, including microstructured optical fibers and planar waveguides on wafer like substrates. These structures exploit nonlinear optical phenomena to broaden the spectrum of an input light source, typically a laser. The process is highly sensitive to the properties of the waveguide structure, including its geometry and material composition.

Microstructured optical fibers, integral to supercontinuum generation, are distinguished by their distinctive configuration of air holes encircling a solid or hollow core. This design enables precise manipulation of the fiber's dispersion characteristics, pivotal for efficient supercontinuum generation. The dispersion profile of these waveguide structures is crucial as it determines how various wavelengths of light travel through the fiber, influencing phase matching conditions essential for nonlinear optical interactions.

Tapered waveguide structures, wherein the cross-sectional outer dimensions (such as the outer diameter in a cylindrical configuration) change along the length of the waveguide, have been utilized to enhance supercontinuum generation. These structures facilitate the manipulation of the waveguide's dispersion properties throughout its length, thereby enabling more effective broadening of the input spectrum. This modification in dispersion characteristics is instrumental in the generation of a broader and more uniform supercontinuum.

One significant challenge in supercontinuum generation is achieving a flat spectral output while at the same time preserving the coherence. Fluctuations in the intensity of different spectral components can limit the usefulness of the supercontinuum in precision applications. Achieving a flat, broad, and coherent supercontinuum is particularly challenging as most attempts result in a loss of coherence, which is essential for applications like spectrograph calibration, dual comb spectroscopy, or beat signal generation with multiple other laser sources like continuous wave lasers.

Prior art has examined diverse configurations of microstructured fibers and waveguides to tackle these challenges. US 10 698 155 B2, for example, details the fabrication of microstructured fibers and focuses on the capability to customize the zero dispersion wavelength, ZDW, of these fibers. This document underscores the significance of ZDW in the context of supercontinuum generation, as it directly affects the phase-matching conditions essential for nonlinear processes.

EP 2 637 265 A1 details the generation of ultrashort pulses utilizing a laser resonator, which incorporates a nonlinear optical loop mirror. These pulses can serve as the pump source for supercontinuum generation, highlighting the influence of the pump laser's characteristics on the efficiency and quality of the supercontinuum.

US 11 221 445 B2 provides insights into supercontinuum generation using tapered microstructured optical fibers. It describes a configuration where the untapered original fiber has a core diameter greater than 7 µm, and the pump wavelength is in the normal dispersion range. This document also addresses the issue of fiber damage at high optical powers, suggesting the use of end caps at the fiber input end to enhance the damage threshold.

Recent academic research has made significant contributions to the understanding of supercontinuum generation in tapered waveguides. Zhang et al. in "Supercontinuum generation of 314.7 W ranging from 390 to 2400 nm by tapered photonic crystal fiber" (Optics Letters, 46(6), 1429-1432, 2021), and Jiang et al. in "Transition profile control for broadband visible supercontinuum generation in tapered PCF" (CLEO: Science and Innovations, 2015, paper JW2A.96) have explored the impact of tapering on the supercontinuum spectrum. These investigations highlight how the taper transition's shape and the taper sections' length can significantly alter the spectral properties of the supercontinuum.

The prior art in the field of supercontinuum generation using tapered microstructured fibers faces several challenges and limitations, which the present invention aims to address.

Firstly, efficient coupling of light into the fiber is crucial, especially when the available pump power is limited. Small core sizes (mode field diameter < 3µm) should be avoided due to their high numerical aperture (NA), which complicates coupling. For planar waveguides, inverse tapers or double inverse tapers at the coupling ends enhance efficiency. These short tapers are designed specifically for input and output coupling and should not be confused with taper transitions used for dispersion modification. Generally, larger fiber diameters simplify coupling due to lower NA, improving alignment tolerance and reducing sensitivity to angular deviations in the coupling optics.

Secondly, the prior art indicates that without finely tailored taper shapes, the resulting supercontinuum tends to be structured, or uneven, across the spectrum. Achieving a flat, broad, and uniform supercontinuum necessitates precise control over the taper transition shape. This involves adjusting various parameters such as the length of the down-taper and up-taper transitions, the cross-sectional outer dimensions (outer diameter) at the taper waist, and other geometrical features of the fiber.

Another significant issue arises when using pump sources with high repetition rates, such as GHz or multi-GHz frequencies. Since nonlinear processes scale with the pulse energy, it is essential to keep the pump pulse energy constant to achieve consistent supercontinuum spectral coverage across various repetition rates. Increasing the repetition rate by factors of 10 or even 100 consequently raises the average power proportionally. This scaling presents a challenge as tapered microstructured fibers are prone to damage at high incident power levels, particularly within the taper transition at the input side. This damage often leads to burning and melting of the fiber, which cannot be resolved merely by adding an end cap at the fiber input end, as suggested in some prior art. To avoid loss of coherence, nonlinear amplification of amplified spontaneous emission, and soliton fission, it is advisable to use shorter fiber lengths - only a few centimeters rather than several meters as seen in some prior implementations.

Accordingly, the problem underlying the present invention resides in overcoming these limitations by providing a system for generating a supercontinuum with a waveguide structure that facilitates efficient light coupling, enables the generation of a flat and broad supercontinuum spectrum, and is robust against damage from high-repetition-rate pump sources.

### Summary of Invention

According to the present invention, the problem identified in the field of supercontinuum generation is addressed by a system for generating a supercontinuum having a novel waveguide structure. This system is defined in independent claim 1, with further advantageous developments outlined in the dependent claims.

Specifically, the present invention encompasses a system for generating a supercontinuum, said system comprising:
a frequency comb generator, which can be a femtosecond (fs) mode-locked laser, a microresonator-based frequency comb, or an electro-optic frequency comb generated by modulating a continuous wave (cw) laser with, for example, an electro-optic modulator; and
a waveguide structure coupled to the frequency comb generator and comprising: an untapered input section with specified first cross-sectional outer dimensions, a down-taper transition section leading to a taper waist section with second cross-sectional outer dimensions that are smaller than the first cross-sectional outer dimensions, followed by an up-taper transition section extending to an untapered output section which reverts to third cross-sectional outer dimensions that are larger than the second cross-sectional outer dimensions, and are preferably identical or similar to, i. e. within a tolerance of +/-10 % of, the first cross-sectional outer dimensions, wherein the input section is configured to have an anomalous dispersion regime and at least one normal dispersion regime, and the taper waist section is configured to have only a normal dispersion regime over a wavelength range critical for the supercontinuum generation.

The frequency comb generator may incorporate additional components that enhance functionality, such as fiber amplifiers and input pulse dispersion management tools including pulse compression and pulse shaping. These components prepare the light before it enters the waveguide structure. For specific applications like the AstroComb, the system utilizes a fiber-based fs laser, filter cavities, a power amplifier, and a pulse compressor.

The waveguide structure in the system according to the present invention provides an efficient dispersion management. The configuration of this waveguide structure, involving precise cross-sectional outer dimensions, allows for optimal nonlinear interactions by precise dispersion control, crucial for a flat and broad supercontinuum spectrum. In this context, "flat" refers to a spectrum with minimal structural variations - over a 100 nm range, the intensity variation remains within 3 dB to 5 dB, excluding the pump region. A "broad" supercontinuum encompasses a spectral width of at least 500 nm, potentially extending over an octave, for instance from 500 nm to 1600 nm when using a 1 µm pump wavelength, or from 900 nm to 2400 nm when using a 1,5 µm pump wavelength. This fine-tuned dispersion control underscores the invention's capability to produce a supercontinuum spectrum that meets stringent application requirements in high-precision photonics.

In the context of the invention, a wavelength range critical for the supercontinuum generation may typically span from 500 nm to 1600 nm when employing a pump source with a wavelength of approximately 1 µm. Such a configuration ensures the fulfillment of optimal phase-matching conditions and facilitates the necessary nonlinear interactions to produce a coherent and broad supercontinuum. Alternatively, the wavelength range critical for the supercontinuum generation may span, for example, from 400 nm to 1200 nm, preferably from 500 nm to 1000 nm.

For a pump wavelength of 1,5 µm, the spectrum may span from 900 nm to 2400 nm, or from 1200 nm to 2200 nm or other combinations in that range.

The present invention may significantly advance supercontinuum generation by employing a femtosecond (fs) or picosecond (ps) mode-locked laser as the pump source. It strategically places the pump wavelength within the anomalous dispersion regime of the original, untapered waveguide structure. Supercontinuum generation primarily occurs in the taper transition sections, where a careful shift of the dispersion profile through controlled transition shaping results in a flat and broad supercontinuum, extending to the point where no group velocity dispersion (GVD) zero-crossing occurs. This method effectively eliminates spectral gaps and maintains spectral integrity across the taper waist.

The waveguide structure is configured to be compatible with fs or ps laser pumps, and it shows resilience and flexibility for use with various pump sources (frequency comb sources), accommodating different comb mode spacings and enhancing its suitability for high-repetition-rate applications. This robust and adaptable design is crucial for generating stable and coherent supercontinuum light, making it highly valuable for applications in precision metrology and optical communications.

According to an embodiment of the present invention, the down-taper transition section and the up-taper transition section each have a length between 5 cm and 15 cm, preferably between 8 and 12 cm.

A precise control over lengths allows for optimal shaping of the supercontinuum spectrum, catering to different wavelength requirements while maintaining the structural integrity of the waveguide.

The waveguide structure may be implemented as a waveguide on a planar substrate structure, in particular a photonic integrated circuit, PIC. Additionally, in configurations where applicable and irrespective of the substrate implementation, the down-taper transition section and the up-taper transition section may each have a length between 3 mm and 30 mm.

This embodiment introduces the adaptation of the waveguide structure to a photonic integrated circuit (PIC) format. This enables the advantages of miniaturization and integrated optics, coupled with improved precision in waveguide fabrication, potentially resulting in more compact and efficient supercontinuum sources. Another advantage of the PIC implementation is that the nonlinearity of typical PIC waveguide materials such as silicon nitride or lithium niobate is often higher than that of fused silica, a typical material for optical fibers, allowing the structure to be shorter and the required power levels lower.

The waveguide structure may be configured as a tapered microstructured fiber, the untapered input section having a core diameter in a range of about 3 µm to 5 µm. Additionally, in the same or a different configuration, the untapered input section may have two zero dispersion wavelengths ZDW1 and ZDW2, with ZDW1 located within a wavelength range of about 900 nm ± 40 nm and ZDW2 located at a wavelength larger than 2000 nm, thereby establishing an anomalous dispersion regime between the zero dispersion wavelengths ZDW1 and ZDW2.

These specifications establish an effective anomalous dispersion regime between ZDW1 and ZDW2, which is essential for the generation of a broad and flat supercontinuum, thus enhancing the fiber's performance for a variety of optical applications.

A further development involves configuring the waveguide structure for use with a pump source, said pump source being an ultrashort pulse laser, and the wavelength of the ultrashort pulse laser being situated within the anomalous dispersion range established between the zero dispersion wavelengths ZDW1 and ZDW2.

As the taper evolves, the maximum of the group velocity dispersion (GVD) shifts to shorter wavelengths, leading to a point where the GVD at the pump wavelength becomes negative. Subsequently, the entire GVD curve shifts below zero, indicating a transition to the normal dispersion regime.

This configuration optimizes the interaction between the pump laser and the waveguide's dispersion characteristics. By designing the waveguide to align with the pump laser's wavelength within the specified anomalous dispersion range, the efficiency of supercontinuum generation is significantly enhanced. This strategic placement of the pump wavelength ensures effective phase-matching conditions, which are vital for facilitating the broadening of the spectrum and generating a high-quality, flat supercontinuum. This development represents a thoughtful integration of the waveguide's physical properties with the operational parameters of the pump source, resulting in a synergistic enhancement of the overall supercontinuum generation process.

The down-taper transition section may be configured such that the zero dispersion wavelengths ZDW1 and ZDW2 progressively blue-shift until they both vanish, facilitating complete supercontinuum generation within this section and yielding a spectrum free of strong modulation.

Such a configuration addresses and overcomes the challenge of spectral gaps that can diminish the quality and utility of the supercontinuum. By ensuring that the spectrum generated is free of strong modulation, this configuration aspect significantly enhances the applicability and performance of the waveguide in various applications requiring a broad and uninterrupted supercontinuum, such as in spectroscopy, metrology, and telecommunications. This development demonstrates a keen understanding of the intricate interplay between waveguide geometry, dispersion characteristics, and nonlinear optics, culminating in a waveguide capable of producing a superior supercontinuum spectrum.

The length of the down-taper transition section may be configured to generate a flat supercontinuum spectral envelope.

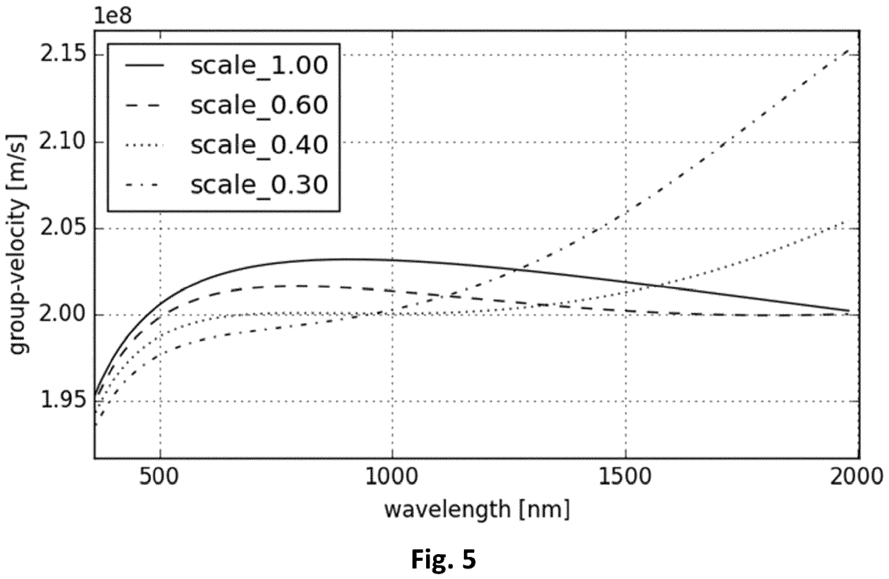

The length of the down-taper transition section can be configured to produce a flat supercontinuum spectral envelope, balancing the trade-off where a longer section enhances conversion efficiency but also increases the risk of coherence loss. The flatness of the spectrum is primarily determined by tapering down to the point where zero dispersion wavelengths (ZDWs) vanish, as previously discussed. Careful control of the taper length and profile optimizes the spectral characteristics and performance of the supercontinuum generation. To elucidate the physical concept behind coherent supercontinuum generation, reference is made to the group delay curve depicted in Fig. 5. The phase matching condition necessary for generating new wavelengths mandates that light at the pump wavelength and the newly generated light travel at identical velocities. As the transition from scale 1,00 to scale 0,30 is observed, it is apparent that the point of equal velocity shifts toward shorter wavelengths, precisely delineating the generation path for specific wavelengths. Below scale 0,40, the absence of an equal velocity point results in the cessation of spectral broadening. Therefore, tapering down to this critical juncture is advantageous as it prevents the formation of multiple conversion paths that could lead to significant spectral modulation, interference, and a degradation of coherence.

Given typical pulse energies in the picojoule (pJ) to nanojoule (nJ) range and the inherent nonlinearity of fused silica in photonic crystal fibers used for tapers, taper lengths should be between 5 cm and 15 cm to achieve effective spectral broadening. Conversely, in silicon nitride waveguides, which have much higher nonlinearity and smaller waveguide dimensions, the waveguide length required for effective broadening is significantly reduced, ranging from 1 mm to 30 mm.

The concept of a "flat" supercontinuum is essential for applications where a uniform intensity across a broad spectrum is desirable. In this context, "flat" refers to the minimization of variations in the intensity across the generated supercontinuum spectrum. This uniformity ensures that all parts of the spectrum are equally represented, enhancing the utility of the supercontinuum for various applications. Using computational models that simulate the waveguide's optical properties, the optimal length for the down-taper transition section can be calculated before the waveguide is fabricated. This length is then used during the manufacturing process.

The taper waist section may be devoid of a zero dispersion wavelength, enabling the transmission of optical signals without substantial changes in their spectral characteristic.

The position of the zero group velocity dispersion (GVD) affects the dispersion regime. At the end of the taper transition, all relevant wavelengths shift into the normal dispersion regime. This shift causes the input pulse to spread temporally, resulting in a loss of peak energy and, consequently, reducing its capacity for further nonlinear interactions.

The absence of zero dispersion wavelengths in the taper waist avoids the complications of dispersion-related effects, thereby stopping the nonlinear effect and enabling a supercontinuum that is not only broad, but also remarkably uniform and coherent.

As described, this configuration does not introduce multiple paths for generating a specific wavelength, which avoids interference that could otherwise lead to significant spectral structuring.

This characteristic is particularly beneficial in precision spectroscopy, frequency metrology, spectrograph calibration and other scientific endeavors where spectral consistency is paramount.

Preferably, the taper waist section has a variable length, specifically adapted to optimize supercontinuum generation for different spectral requirements.

By varying the length of the taper waist section, the waveguide structure can be optimized for different applications, such as telecommunications, medical imaging, spectrograph calibration, and scientific research. This flexibility ensures that the supercontinuum generated is best suited for the intended use, whether it requires a broader spectrum, more intense light at certain wavelengths, or other specific characteristics.

Further preferably, the up-taper transition section is configured to ensure consistent transmission of the supercontinuum, maintaining spectral integrity irrespective of the presence or absence of zero dispersion wavelengths within the up-taper transition section, also avoiding strong back reflections by providing adiabatic impedance matching.

This configuration of the up-taper transition section ensures that the supercontinuum's spectral integrity is preserved as the light travels through this part of the waveguide. This is crucial for applications that require a stable and reliable supercontinuum spectrum, as any significant alteration in said spectrum could impact the performance and accuracy of the system. In addition, this configuration allows for effective transmission of the supercontinuum regardless of whether zero dispersion wavelengths, ZDWs, are present in the up-taper section.

Preferably, the length of the up-taper transition section is specifically selected to either be the same as or different from the length of the down-taper transition section, thereby enabling customized taper configurations.

The up-taper is configured to avoid further alterations to the spectrum and coherence properties. Consequently, it may be configured to be significantly shorter than the down-taper, potentially by a factor of 2 or up to 5, to ensure minimal impact on the optical characteristics of the system.

The ability to adjust the length of the up-taper transition section independently of the down-taper transition section allows for a high degree of customization in the waveguide structure. This flexibility is beneficial for tailoring the waveguide's properties to specific applications or experimental requirements. This can influence the dispersion profile and nonlinear interactions within the waveguide structure, leading to optimized supercontinuum generation for different wavelength ranges or spectral characteristics.

Preferably, the untapered output section reinstates the two zero dispersion wavelengths ZDW1 and ZDW2 as in the untapered input section, ensuring consistent transmission characteristics for the supercontinuum generated in the waveguide structure.

When being configured in this way, the tapered microstructured fiber ensures a consistent and predictable transmission characteristic throughout the entire fiber. This consistency is crucial for applications where the integrity and stability of the generated supercontinuum are paramount.

Preferably, the waveguide structure is enveloped with an index-matching material to mitigate damage when operated with a high-repetition-rate GHz pump source at high average powers exceeding 1 W.

The use of an index-matching material provides additional protection against thermal and mechanical stresses that can occur at high power levels. This enhancement in durability ensures that the waveguide structure can withstand prolonged use without degradation in performance, leading to greater reliability in demanding applications. The presence of the index-matching material helps to dissipate heat more efficiently and prevent localized heating. This allows the waveguide to handle higher power levels from GHz repetition rate pump sources without incurring damage, thereby extending the operational range of the device.

To further refine the taper transition, it is beneficial to explore various geometries beyond a linear taper, such as parabolic, exponential or even stair-step configurations. These alternative shapes can be particularly effective in managing dispersion characteristics more precisely. In addition, the use of a gradient in the taper slope - starting more gradually and increasing in steepness towards the end - can effectively mitigate the abrupt cut-off of dispersion curves at shorter wavelengths, thereby enhancing the flatness of the supercontinuum spectrum. Computational simulations support these modifications, optimizing the taper transitions. A preferred embodiment incorporates a taper where the slope in the first half is less steep than in the second half, optimizing supercontinuum generation across the spectrum.

In summary, the present invention represents a significant advancement in the field of photonic waveguide structures for supercontinuum generation. It introduces a novel configuration featuring distinct cross-sectional dimensions along different sections of the waveguide, optimizing dispersion properties to enhance supercontinuum generation. Specifically, it incorporates an untapered input section with anomalous and normal dispersion regimes, a tapered waist section with exclusively normal dispersion, and an untapered output section. This configuration allows for efficient light coupling, improved spectral coherence, and broader application potential, thereby addressing key limitations of existing supercontinuum generation technologies.

### Brief Description of Drawings

Further advantages and characteristics of the present invention will become apparent from the subsequent detailed description of preferred embodiments, made with reference to the accompanying drawings. Said drawings depict:
- Fig. 1:: Schematic representation of a system for generating a supercontinuum according to the present invention, featuring a frequency comb generator coupled to a waveguide structure.
- Fig. 2:: Cross-section of a microstructured optical fiber with a central core and concentric air hole rings, exemplifying the dispersion control in a waveguide structure utilized in a system for supercontinuum generation according to the present invention.
- Fig. 3:: A detailed schematic of a tapered microstructured fiber as an example of a waveguide structure utilized in a system for supercontinuum generation according to the present invention, showing various sections including the untapered input and output sections, down-taper transition, taper waist, and up-taper transition sections.
- Fig. 3a:: An illustration of an alternative embodiment of a waveguide structure with a rectangular cross-section implemented on a photonic integrated circuit, PIC, showcasing the adaptability of the present invention to substrate-based configurations.
- Fig. 4:: Dispersion curves of a waveguide structure (tapered microstructured fiber) utilized in a system for supercontinuum generation according to the present invention at varying scales, illustrating the dispersion manipulation essential for generating a flat and coherent supercontinuum across a broad wavelength range.
- Fig. 5:: Group velocity curves of a waveguide structure (tapered microstructured fiber) at different down-taper scales, illustrating the wavelength-dependent group velocity crucial for dispersion management in supercontinuum generation.
- Fig. 6a:: Simulation results demonstrating spectral evolution (lower plot) and generated supercontinuum (upper plot) for a waveguide structure, showcasing the supercontinuum generated when tapering down to a diameter that eliminates anomalous dispersion.
- Fig. 6b:: Simulation results for a waveguide structure, providing a contrasting scenario to Fig. 6a, where the spectral evolution (lower plot) and supercontinuum generation (upper plot) are demonstrated with the taper waist section maintaining anomalous dispersion.
- Fig. 7a:: Simulation results for a waveguide structure with an overly short down-taper transition, demonstrating the spectral evolution (lower plot) and resultant supercontinuum (upper plot) that underscores the criticality of taper length precision.
- Fig. 7b:: Simulation results for a waveguide structure with an overly long down-taper transition, demonstrating the spectral evolution (lower plot) and resultant supercontinuum (upper plot) that underscores the criticality of taper length precision.
- Fig. 8:: A graphical comparison of simulated and experimental supercontinuum spectra for waveguide structures, highlighting the effect of varying air hole configurations on the spectral output.

### Description of Embodiments

The present invention advances the field by introducing a waveguide structure tailored for efficient and robust supercontinuum generation. This detailed description refers to the accompanying figures, which illustrate various embodiments and aspects of the invention in detail.

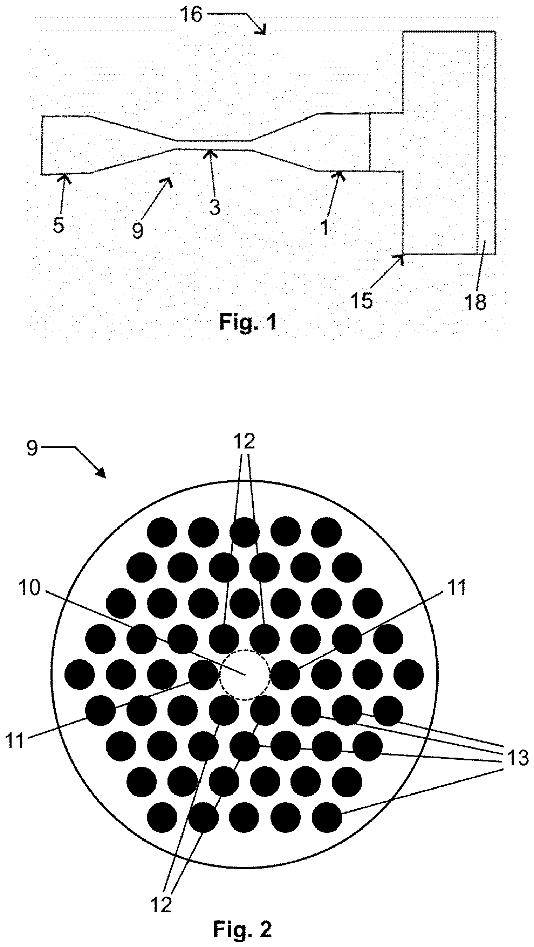

The overall system 16 according to the present invention is shown in Fig. 1 and is configured to generate a supercontinuum and consists of two primary components: the frequency comb generator 15 and the waveguide structure 9.

The frequency comb generator 15, situated on the right side of Fig. 1 and incorporating the pump source 18, acts as the origin of the broadband frequency comb. It produces a spectrum of frequencies employing methods such as mode-locking or modulation. This component is pivotal as it furnishes the initial light input essential for sculpting into a supercontinuum. The frequency comb generator 15 can manifest as a femtosecond mode-locked laser, a microresonator-based frequency comb, or an electro-optic frequency comb, the latter generated by modulating a continuous wave (cw) laser.

The waveguide structure 9 is divided into several parts: the input section 1, the taper waist section 3, and the output section 5. The input section 1, located on the rightmost part of the waveguide structure 9 in Fig. 1, receives the light (frequency comb output) from the frequency comb generator 15. It is configured to have an anomalous dispersion regime at least at one wavelength range, critical for the initiation of the supercontinuum generation process. The taper waist section 3 is the region where the actual modulation of light frequencies occurs, altering the dispersion properties dynamically, achieved by physically tapering the waveguide's dimensions. The output section 5 is located on the leftmost part of the waveguide structure 9 in Fig. 1. It transmits the now modified light, exhibiting supercontinuum characteristics. This section is configured to revert to larger cross-sectional outer dimensions, maintaining the integrity of the transmitted light.

In terms of overall system interaction, light flows from the frequency comb generator 15 into the input section 1 of the waveguide structure 9, where it undergoes complex nonlinear interactions and dispersion modifications across the structure, finally exiting through the output section 5 as a supercontinuum. The frequency comb generator 15 and the waveguide structure 9 are coupled in such a way that ensures minimal loss of light and coherence, crucial for efficient supercontinuum generation.

Fig. 2 illustrates a cross-sectional view of the microstructured optical fiber, MOF, serving as the waveguide structure 9, which undergoes tapering processes vital for the effective generation of supercontinuum. The MOF 9 comprises a solid core 10 that is defined by the innermost circumference of air holes 11 and 12 arranged in a concentric pattern. The microstructured cladding arrangement depicted in Fig. 2 encircles the core 10, forming a specific geometric configuration crucial for managing the dispersion properties of the fiber 9.

The core 10 is made of fused silica, which can be doped with materials such as germanium to improve its optical properties. It is designed with dimensions that optimize the interaction with light, particularly in terms of coupling efficiency and dispersion management. The air holes 11 and 12 are strategically dimensioned and positioned to tailor the dispersive properties of the MOF 9, thereby enabling the manipulation of phase-matching conditions that are vital for nonlinear optical processes, including supercontinuum generation.

This depiction showcases the nuanced engineering behind the MOF 9, where the air holes' 11 and 12 diameters can be altered to produce an elliptical core shape, thereby imbuing the fiber 9 with polarization-maintaining capabilities. The major axis of the elliptical core 10, as determined by the air hole configuration, is denoted as the fiber's 9 core diameter for the purposes of this invention.

In the context of the present invention, the core diameter is meticulously selected to lie within the range of approximately 3 µm to 5 µm, aligning with the numerical aperture, NA, specifications of commercially available aspheric lenses. This alignment is critical for ensuring efficient coupling of the pump light into the MOF 9, which is a determining factor in the efficacy of supercontinuum generation, particularly when operating under limited pump power conditions.

Additionally, the configuration of the cladding, as shown, is indicative of the MOF's 9 ability to maintain structural integrity while facilitating the necessary optical properties. The cladding's design, featuring multiple rings of air holes 11, 12, 13, including but not limited to those illustrated in Fig. 2, extends the fiber's 9 versatility. It allows for different fiber tapering strategies that can influence the shape and coherence of the generated supercontinuum, thereby addressing the problem identified in prior art related to structured supercontinua that lack the flatness and coherence desirable for certain applications, such as spectrograph calibration or dual comb spectroscopy.

In the illustrated embodiment of Fig. 2, the MOF 9 features a core diameter of precisely 4.05 µm, which is meticulously crafted to align with the numerical aperture (NA) of a specific commercial aspheric lens, e. g. the Thorlabs C230TMD-B. This precise calibration between the core size of the MOF 9 and the aspheric lens is pivotal for achieving efficient light coupling, which is a significant factor in the generation of a supercontinuum when utilizing limited pump power.

The core and cladding architecture, as evidenced in Fig. 2, demonstrates the inventive application of varying air hole diameters that not only allow for a customized elliptical core 10, beneficial for maintaining polarization properties but also serve as a testament to the waveguide structure's 9 optimized configuration in accordance with the present invention. This configuration facilitates effective phase-matching conditions, which are crucial for the nonlinear optical processes that drive supercontinuum generation within the MOF 9.

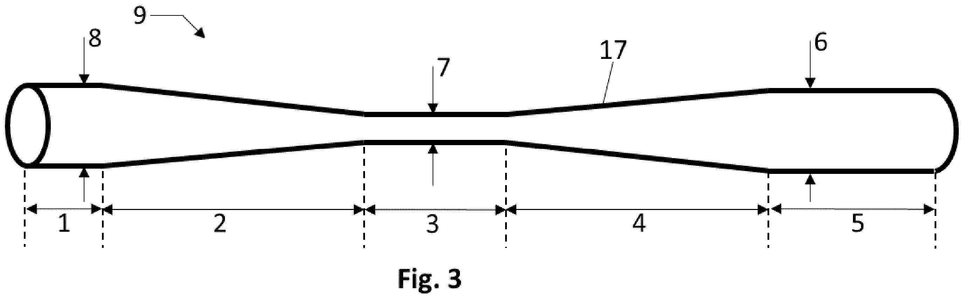

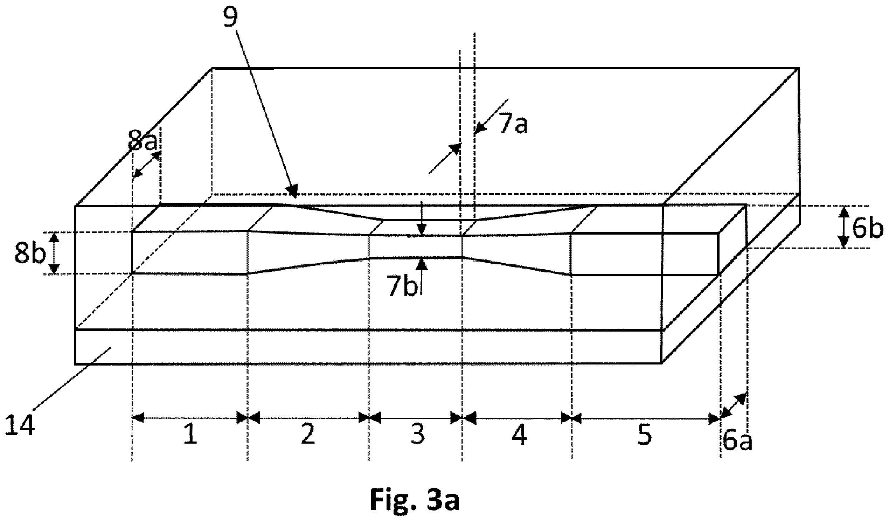

Fig. 3 shows a schematic representation of a tapered microstructured optical fiber, MOF, which is an example of the waveguide structure 9 which is an integral part of the super continuum generation system 16 according to the present invention. This figure visually illustrates the essential components of the fiber taper, which are integral to the waveguide structure 9 as per the present invention. It commences with an untapered input section 1, establishing the entry point for pump light. This initial segment seamlessly narrows into a down-taper transition section 2, which proceeds to a defined taper waist section 3. Following this midsection is the up-taper transition section 4, ultimately extending to an untapered output section 5, completing the fiber taper structure.

Fig. 3 delineates the tapering process of the waveguide structure 9 pivotal to the present invention. The illustration specifies that the initial, uniform cross-sectional outer dimensions, corresponding to the outer diameter 8, 6 of the untapered sections 1, 5, are gradually diminished to a narrower waist outer diameter 7. The consistent outer diameter 6, 8, characteristic of the untapered sections 1, 5, is commonly retained at standard fiber dimensions, exemplified by 125 µm, to facilitate seamless integration with established fiber connectors.

The down-taper transition section 2 and the up-taper transition section 4 are visually detailed, each potentially having lengths that are either matched for symmetry or varied for an asymmetrical configuration. The central taper waist section 3 is depicted as an integral part of the waveguide structure 9, with a length that may be adjusted. The inclusion of this section 3 is vital for the taper's structural robustness, as its omission can lead to increased vulnerability to physical stress, including damage from bending.

Fig. 3 exemplifies the construction of a waveguide structure 9, as claimed in claims 1 to 15, showcasing versatility and resilience for practical applications. This versatility is manifested in the ability to tailor the taper into either symmetrical or asymmetrical configurations, and in adjusting the length of the taper waist section 3, thus catering to varied requirements for supercontinuum generation.

Thus, Fig. 3 illustrates the inventive approach in creating a taper that fulfills functional requirements for efficient supercontinuum generation while also incorporating structural features to improve the durability and adaptability of the MOF 9 across different optical configurations.

Fig. 3a presents an alternative embodiment within the scope of the present invention, depicting a waveguide structure 9 with a rectangular cross-section situated on a substrate 14, specifically tailored for photonic integrated circuits, PICs. This embodiment demonstrates the invention's flexibility in accommodating non-fiber-based waveguide formats. The illustrated waveguide structure 9, predominantly rectangular, can be made of silicon nitride and measure approximately 800 nm in untapered thickness 6b, 8b and 1200 nm in untapered width 6a, 8a. Alternatively, it can be tapered in one dimension only, i. e. the thickness of the waveguide remains constant while the width is reduced, or vice versa.

This waveguide configuration is configured to incorporate one or two zero dispersion wavelengths, ZDWs. Specifically, the shorter wavelength ZDW, designated ZDW1, is likely to be located within approximately 900 nm ± 40 nm (for a pump wavelength of approximately 1 µm). In contrast, the longer wavelength ZDW, designated ZDW2, is found at wavelengths exceeding 1500 nm (for a pump wavelength of approximately 1 µm). Such a dispersion profile indicates that a pump wavelength, such as one emitted from an Yb-doped fiber laser typically operating around 1040 nm, aligns within the anomalous dispersion regime of the initial, non-tapered waveguide structure. This characteristic is crucial for efficient supercontinuum generation. For a pump wavelength of 1,5 µm, the entire dispersion profile shifts to longer wavelengths, positioning ZDW1 just below 1,5 µm and ZDW2 well above 1,5 µm.

Additionally, positioning a zero dispersion wavelength, ZDW, slightly below the pump wavelength is achievable. This placement hinges on variables like the size of the air holes and the contrast between the core and surrounding materials in the waveguide structure 9. Mastering the generation of a flat, broad, and coherent supercontinuum spectrum represents a significant challenge in this field, but it is a vital component for advanced applications such as spectrograph calibration and dual comb spectroscopy.

Fig. 3a demonstrates the adaptability of the present invention to diverse waveguide structures 9, expanding its utility beyond traditional microstructured fiber designs. This versatility is evident in the specification that for a substrate-based waveguide structure 9, such as a Photonic Integrated Circuit, PIC, the lengths of the down-taper and up-taper transition sections 1, 5 can range between 3 mm and 30 mm. This adaptability enhances the applicability of the invention across various optical and photonic systems.

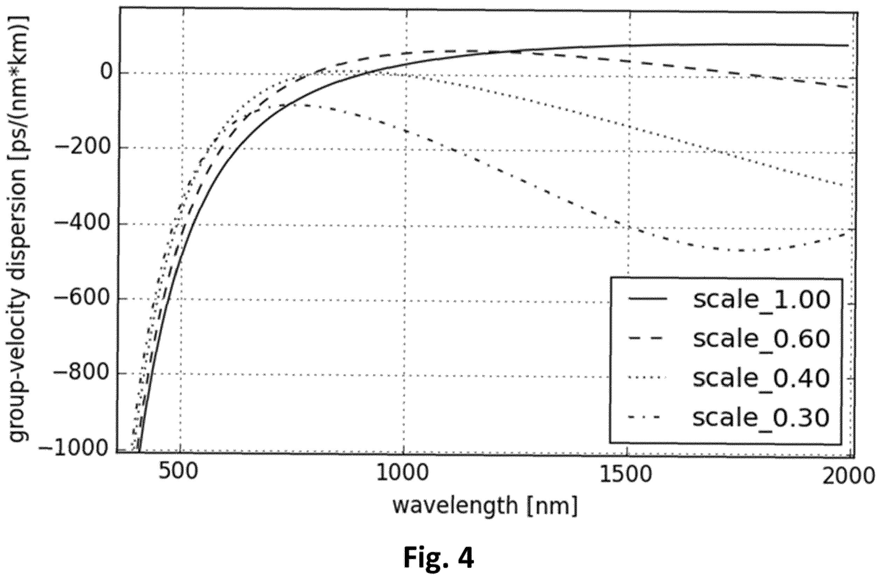

Fig. 4 presents a graphical representation of the dispersion curves for a tapered microstructured fiber, MOF, (see Figs. 1 and 2) at various down-taper scales, elucidating the relationship between wavelength and dispersion characteristics integral to the waveguide structure 9 outlined in the present invention.

Derived from the MOF 9 depicted in Figs. 1 and 2, these curves demonstrate the influence of tapering on the dispersion profile, a key factor in supercontinuum generation. The solid curve marked "scale_1.00" represents the dispersion of the original, untapered fiber (corresponding to the outer diameter 6, 8 in Fig. 3). This solid curve includes two zero dispersion wavelengths, ZDWs: ZDW1 at approximately 901 nm and ZDW2 exceeding 2000 nm. Between these ZDWs lies the anomalous dispersion regime, suitable for the wavelengths emitted by typical ultrashort pulse lasers, such as Yb-doped fiber lasers operating around 1 µm.

In Fig. 4, we observe the transformative impact of tapering on the dispersion profile of the waveguide structure 9, specifically a microstructured optical fiber, MOF. This figure showcases how the dispersion characteristics evolve as the fiber's 9 diameter 7 in the taper waist section 3 is systematically reduced through the tapering process.

The dashed curve labeled "scale_0.60" represents the dispersion curve of the MOF 9 when the diameter 7 is tapered to 60 % of its original diameter 6, 8 in Fig. 3. This adjustment results in a notable shift of the zero dispersion wavelengths, ZDWs: ZDW1 moves to 792 nm and ZDW2 to 1814 nm, highlighting the dynamic nature of the dispersion regime as the tapering scale changes.

Continuing this trend, the dotted curve "scale_0.40" and the dash-dotted curve "scale_0.30" in Fig. 4 correspond to the MOF 9 when its diameter 7 in the taper waist section 3 is further reduced to 40 % and 30 % of the original, respectively. These curves illustrate progressive shifts in the ZDWs, with the "scale_0.30" curve being particularly noteworthy for its absence of any ZDWs. This absence signifies a complete transition to a regime without anomalous dispersion, a critical factor for the generation of a flat and coherent supercontinuum as targeted in the present invention.

Therefore, Fig. 4 serves as a vital graphical representation of how specific changes in the tapering scale of the MOF, which is an important example of the waveguide structure 9, directly affects its dispersion properties, providing a roadmap for optimizing supercontinuum generation in various application scenarios.

The configuration of the tapering in the waveguide structure 9, as depicted in Figs. 2 and 2a, plays a pivotal role in shaping the dispersion curve, as depicted in Fig. 4, which is fundamental for realizing a flat, broad, and coherent supercontinuum. Achieving this type of supercontinuum is vital for applications such as spectrograph calibration or dual comb spectroscopy or simultaneous detection of beat signals with cw lasers at different wavelengths.

Preserving the coherence of the supercontinuum is crucial, especially when the broadband frequency comb structure risks being compromised by waveguide structures subjected to suboptimal tapering processes. The careful adjustment of tapering parameters, as illustrated in Fig. 4, is therefore critical to preserving the integrity and functional capabilities of the supercontinuum in accordance with the objectives of the present invention.

The tapering rate, a key factor in shaping the dispersion characteristics of the waveguide structure 9, is defined as the reduction in cross-sectional outer dimensions per unit length. For instance, uniformly tapering a waveguide structure from a core diameter of 5 µm to 1 µm over a length of 8 cm results in a tapering rate of 0,5 µm per cm. Adjusting this rate enables precise control over supercontinuum generation, accommodating diverse wavelength targets, from visible light (approximately 400 nm to 900 nm) to mid-infrared ranges. The choice of pump wavelength and waveguide material, such as silicon nitride (SiN) on silicon wafer, silicon on insulator (SiOl), lithium niobate on insulator (LNOI), tantalate, or aluminum nitride (AIN), further tailors the supercontinuum to specific application needs.

Fig. 4 effectively demonstrates the impact of varying taper dimensions in a MOF 9 on its dispersion characteristics. This figure underscores the relationship between taper modifications and dispersion properties, which is crucial for optimizing supercontinuum generation in waveguide structures 9 as described in the embodiments of the present invention. These strategic alterations facilitate the adaptation of the waveguide structure 9 to achieve desired supercontinuum characteristics, particularly in terms of coherence and spectral breadth.

Fig. 5 exhibits the group velocity curves of a tapered microstructured fiber, MOF, an embodiment of the waveguide structure 9 as delineated in the present invention. These curves are mapped at varying down-taper scales, illustrating the interplay between wavelength and group velocity, which is pivotal for managing dispersion in the generation of a supercontinuum. The depicted curves are based on the MOF 9 illustrated in Fig. 2. The down-taper scales applied to the MOF's 9 taper waist diameter 7 (see Fig. 3) vary, demonstrating how changes in the cross-sectional dimensions of the MOF 9 at different points along its length affect the group velocity and, consequently, the dispersion characteristics essential for effective supercontinuum generation.

In Fig. 5, parallel to the observations in Fig. 4, each curve portrays the interplay between wavelength and group velocity at distinct scales of fiber diameter reduction. The solid curve labeled as "scale_1.00" signifies the group velocity profile of the MOF 9 in its original, untapered form, correlating to its full diameter (as represented by outer diameter 6, 8 in Fig. 3). This solid curve exhibits two distinct turning points, which mark the zero dispersion wavelengths, ZDWs, with one at 901 nm and the other anticipated to be beyond 2000 nm. These turning points define the transition between normal and anomalous dispersion, critical for understanding the dispersion dynamics within the waveguide structure 9 as per the present invention.

In Fig. 5, the influence of tapering on group velocity is depicted across various scales. The dashed "scale_0.60" curve, the dotted "scale_0.40" curve, and the dash-dotted "scale_0.30‴ curve each represent different degrees of fiber diameter reduction. For the dashed "scale_0.60" curve, the group velocity's transition points are located at 792 nm and 1814 nm, indicating a shift in the zero dispersion wavelengths, ZDWs, resulting from the tapering. This shift is further demonstrated in the dotted "scale_0.40" curve, where the transition points appear at 790 nm and 983 nm. Remarkably, in the dash-dotted "scale_0.30" curve, a continuous rise is observed without any distinct turning points, signifying the absence of ZDWs and a complete shift to a regime of normal dispersion, vital for achieving the intended supercontinuum generation in the waveguide structure 9 of the system 16 according to the present invention.

Fig. 5 is pivotal in elucidating the influence of tapering rate on the dispersion characteristics of the waveguide structure 9. The tapering rate, quantified as the decrease in diameter per unit length - for instance, 0,5 µm per cm when tapering from a 5 µm to a 1 µm core diameter over a length of 8 cm - directly affects the dispersion properties of the waveguide structure 9. These properties are integral to the efficiency and quality of the supercontinuum generation, as per the embodiments of the present invention.

Thus, Fig. 5 also effectively demonstrates the adaptability of the waveguide structure 9 to a variety of materials and target wavelength ranges, a key aspect of the present invention. By using materials such as SiN on Si wafer, Si on insulator, LNOI, tantalate or AIN, the waveguide can facilitate supercontinuum generation over a broad spectrum. This spectrum can range from visible light (400 nm to 900 nm) to mid-infrared wavelengths, depending on the pump wavelength and specific tapering parameters employed in the waveguide structure 9.

Fig. 5 is pivotal in depicting how the scale of tapering in a MOF 9 influences group velocity, a fundamental aspect of the present invention. This relationship is crucial for the generation of a flat, coherent, and broad supercontinuum spectrum. Such a spectrum is particularly beneficial for applications like spectrograph calibration and dual comb spectroscopy or the simultaneous detection of beat signals with cw lasers at different wavelengths, demonstrating the practical applicability of the invention.

Figs. 5a and 5b are instrumental in demonstrating the impact of tapering on supercontinuum generation within microstructured fibers 9, resonating with the inventive concepts and embodiments explored in this description. These figures elucidate how varying approaches to tapering influence both the spectral evolution and the generation of supercontinuum, pertinent to the present invention.

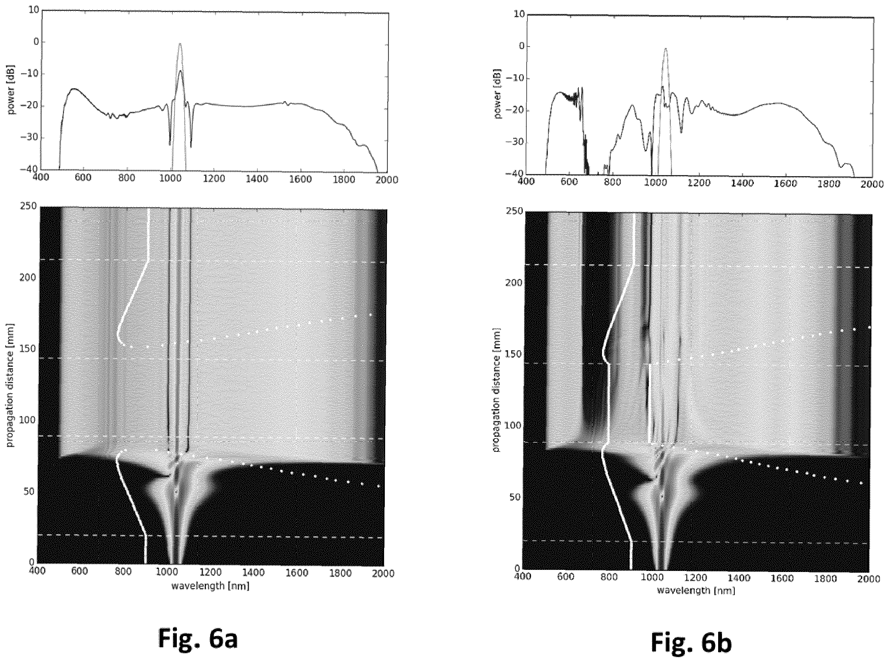

The lower plot in Fig. 6a depicts a simulation of spectral evolution within a tapered microstructured fiber 9 (an example of a waveguide structure), demonstrating the effects when tapering reduces the fiber diameter to a point that results in the elimination of anomalous dispersion. This simulation is based on parameters including a pump laser with a central wavelength of 1040 nm, pulse duration of 130 fs, and pulse energy of 0.18 nJ.

The taper configuration illustrated in Fig. 3 comprises several distinct sections: an untapered input section 1 of 20 mm length, a down-taper transition section 2 extending 69.1 mm, a central taper waist section 3 of 55 mm length, followed by an up-taper transition section 4 also measuring 69.1 mm, and culminating in an untapered output section 5 of 20 mm. This symmetrical configuration exhibits a taper waist outer diameter 7 of 38 µm, equating to roughly 30 % (0.3 times) of the original untapered diameter 6, 8 of the fiber 9, which is 125 µm.

The tapering process effectively removes zero dispersion wavelengths, ZDWs, at the taper waist section 3. This results in the complete supercontinuum generation within the down-taper transition section 2. After this section 2, the supercontinuum spectrum remains largely unchanged in the subsequent sections 3, 4, and 5.

The upper plot in Fig. 6a shows the supercontinuum generated at the output of the tapered fiber 9. This supercontinuum is distinguished by its flat spectral profile within a 10 dB range in the visible spectrum. This demonstrates the effectiveness of the specific tapering approach used in achieving a flat and broad supercontinuum generation.

The lower plot of Fig. 6b presents a different scenario compared to Fig. 6a, illustrating the spectral evolution in a tapered microstructured fiber 9 where the tapering process does not lead to the elimination of anomalous dispersion at the taper waist section 3. This depicts a variant tapering result that is not encompassed by the present invention, in which the employed tapering approach maintains anomalous dispersion in the taper waist section 3, thereby influencing the properties of the supercontinuum produced.

In the simulation presented in Fig. 6b, the underlying taper configuration is akin to that in Fig. 6a, with a notable distinction in the taper waist section 3. Here, the outer diameter 7 at the taper waist is set at 50 µm, constituting 0.4 times the original diameter 6, 8 of the fiber 9. This proportionate reduction in diameter maintains the anomalous dispersion at the taper waist, as evidenced by the presence of zero dispersion wavelengths, ZDWs, at 790 nm and 983 nm. This variation in taper waist diameter 7 illustrates an alternative embodiment outside the scope of the present invention, emphasizing the impact of taper dimensions on the dispersion properties and resulting supercontinuum characteristics.

In the scenario depicted in Fig. 6b, the taper configuration results in supercontinuum generation extending beyond the down-taper transition section 2, continuing through the taper waist section 3 and into the subsequent up-taper transition section 4 and untapered output section 5. However, as shown in the lower plot of Fig. 6b, there is a discernible spectral gap in the range from 680 nm to 780 nm, underscoring the influence of the outer dimensions of the taper waist cross section on the continuity and uniformity of the generated supercontinuum spectrum.

The upper plot of Fig. 6b showcases the output supercontinuum spectrum in a configuration where the anomalous dispersion is not entirely eliminated in the taper waist section 3. Contrasting with Fig. 6a, this spectrum exhibits a notable spectral gap, emphasizing the importance of fully transitioning to a normal dispersion regime in the taper waist section 3 for achieving a continuous and gap-free supercontinuum spectrum in line with the objectives of the present invention.

Figs. 5a and 5b effectively illustrate the crucial role of precise tapering in microstructured fibers 9, as per the present invention, in influencing the characteristics of supercontinuum generation. Fig. 6a exemplifies the scenario where tapering is adjusted to fully eliminate anomalous dispersion at the taper waist, yielding a flat and broad supercontinuum. This contrasts with Fig. 6b, where retaining anomalous dispersion at the taper waist results in a supercontinuum with spectral gaps. The efficacy in generating a coherent and flat supercontinuum spectrum, as depicted in Fig. 6a, is pivotal for applications necessitating coherent light sources, such as spectrograph calibration and dual comb spectroscopy.

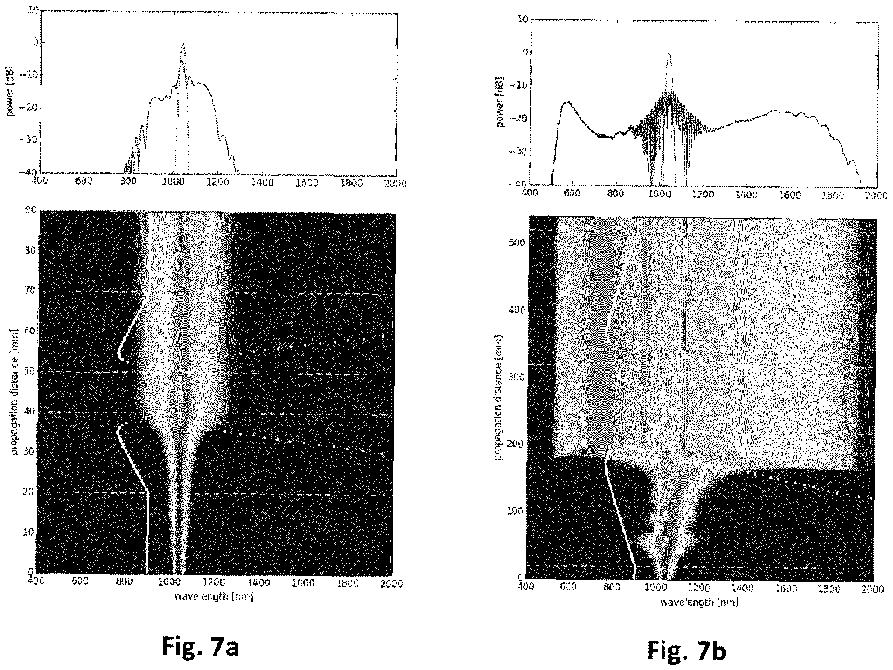

Fig. 7a provides simulation insights into the supercontinuum generation for a tapered microstructured fiber (waveguide structure 9), especially under conditions of an insufficiently long down-taper transition section 2. The lower plot in Fig. 7a captures the spectral evolution within a microstructured fiber 9 whose down-taper transition section 2 is limited to a length of 20 mm. This constrained length is inadequate to facilitate the complete development of a supercontinuum, a key characteristic for achieving optimal broadband spectral coverage.

The tapering specifications, as illustrated in Fig. 3, include a taper waist diameter 7 of 38 µm, which is 0,3 times smaller than the original diameter 6, 8 of the untapered (input and output) fiber sections 1, 5. However, as evidenced in the upper plot of Fig. 7a, this reduced length of the down-taper transition section 2 results in a supercontinuum spectrum that does not exhibit the desired broad bandwidth. This simulation outcome highlights the critical importance of ensuring a down-taper transition section 2 of appropriate length to achieve the full potential of supercontinuum generation within the waveguide structure 9.

Fig. 7b investigates the effects of an overly extended down-taper transition section 2 on supercontinuum generation in a tapered microstructured fiber, representative of the waveguide structure 9. The lower plot in Fig. 7b shows the spectral evolution when the length of the down-taper transition section 2 is extended to 200 mm. Such excessive length hinders the effective development of the desired supercontinuum characteristics, culminating in an irregular and incomplete spectrum as visualized in the upper plot in Fig. 7b. This outcome deviates from the ideal flat and broad supercontinuum spectrum, underscoring the importance of appropriately balancing the down-taper transition length for optimal broadband supercontinuum generation.

The taper dimensions used in the simulation for Fig. 7b, aligning with the parameters outlined in Fig. 3, illustrate that improper lengths of the down-taper transition section 2 can significantly impact the quality of the supercontinuum output. Overly short or excessively long down-taper transition lengths can lead to suboptimal supercontinuum characteristics. Hence, accurately calibrating the length of the down-taper transition section 2 is crucial for obtaining a well-defined and flat supercontinuum envelope. Optimal taper lengths for achieving a balanced supercontinuum spectrum, both in terms of breadth and flatness, typically range from approximately 5 cm to 15 cm, with a more preferred range being 5 cm to 10 cm. This emphasizes the importance of precision in determining taper length for effective and efficient supercontinuum generation within the waveguide structure 9.

The findings from Figs. 6a and 6b collectively underscore the critical role of precise taper length in designing a waveguide structure 9 that efficiently generates a high-quality supercontinuum. Accurate taper length calibration is vital not only for optimizing the supercontinuum spectrum but also for maintaining the structural resilience of the microstructured fiber 9. This aspect becomes particularly crucial in high-power applications, where the integrity of the fiber 9 is paramount.

Additionally, the employment of index-matching materials 17, as shown in Fig. 3, plays a key role in safeguarding the fiber 9 against potential damage from high-power light leakage. This protective measure is essential for preserving the fiber's 9 performance and extending its operational lifespan in various demanding optical setups.

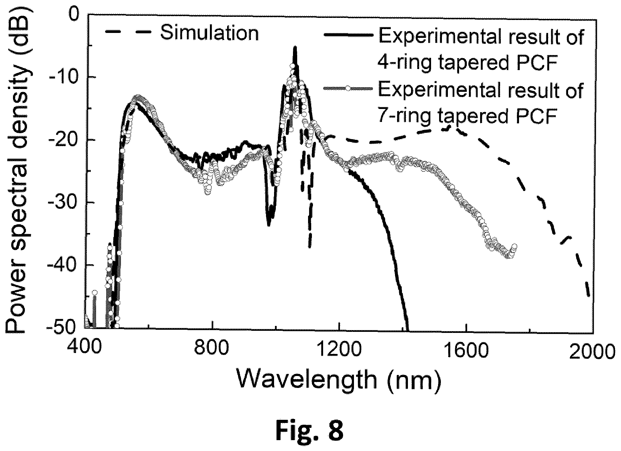

Fig. 8 presents a critical comparison between simulated and experimental supercontinuum spectra, illustrating the real-world effectiveness of the waveguide structures 9 as outlined in the present invention. The graph includes a simulated supercontinuum curve derived from the parameters established in Fig. 6a. This curve is essential for evaluating the fidelity of the experimental results to the theoretical model.

Fig. 8 displays experimental results derived from two different tapered microstructured fibers 9, each with unique air hole ring configurations, as detailed in Fig. 2. The first set of experimental data is obtained from a fiber 9 with a 4-ring taper configuration, and the second set from a fiber 9 featuring a 7-ring taper. These experimental setups maintain consistency with the taper shape and pump parameters used in the simulation, allowing for a direct comparison between theoretical predictions and practical outcomes.

The key revelation of Fig. 8 lies in the flat supercontinuum spectra produced in both experimental scenarios, distinguished by their gap-free nature. This evidences the success of the tapering strategies described in the present invention for achieving a coherent and expansive supercontinuum. The experimental data closely mirror the simulated outcomes, primarily in the shorter wavelength regions, underscoring the simulation's reliability in predicting real-world fiber behavior.

In the experimental setup, the tapered microstructured fibers 9, both with 4-ring and 7-ring configurations, were tested under a 25 GHz pump repetition rate. This setup required an average input power of 10 W to achieve the same 0.18 nJ pulse energy as in the simulation. To counteract potential damage from such high-power operations, the entire taper, including the down-taper transition, taper waist, and up-taper transition sections 2, 3, and 4, was enveloped in index-matching gel (index-matching material 17). This precaution was essential for preventing fiber damage from intense light leakage and overheating. The index-matching gel (index-matching material 17) played a dual role: it facilitated the removal of infrared light from the fiber's 9 cladding and functioned as a heat conductor, directing excess heat to a metal plate linked to the fiber 9.

Fig. 8 highlights the adaptability in configuring tapers for waveguide structures 9. The experimental data demonstrates that varying the lengths of the down-taper and up-taper transition sections 2, 4 can yield effective results, opening the door to asymmetrical taper configurations. Such flexibility in configuration allows for the creation of custom-tailored waveguide structures 9, optimally adjusted to meet specific requirements for supercontinuum generation, as per the inventive aspects of the present invention.

In summary, Fig. 8 bridges the gap between theoretical modeling and experimental validation, demonstrating the practical effectiveness of the waveguide structures 9 for achieving the desired supercontinuum properties. This effectiveness is crucial for applications requiring high repetition rates and high-power inputs, where the resilience and adaptability of the tapered fiber 9 are key factors.

The above description meticulously details an innovative approach to developing waveguide structures 9 for the generation of a supercontinuum. It encompasses a thorough examination of the processes involved in tapering microstructured fibers 9 and elucidates their consequential effects on supercontinuum generation. The above description demonstrates the adaptability of these waveguide structures 9 across various embodiments, highlighting their compatibility with diverse configurations and material types. This adaptability significantly extends their practical applications.

The precision manifested in crafting these waveguide structures 9 is underscored by the alignment between experimental results and theoretical forecasts, validating the invention's efficacy in high-power contexts. This innovation adeptly realizes a coherent, flat, and broad supercontinuum spectrum. Therefore, the present invention represents a significant breakthrough in photonics, introducing advanced solutions in fields like spectrograph calibration, dual comb spectroscopy, simultaneous detection of beat signals with cw lasers at different wavelengths, and various high-precision optical applications.

## Claims

1. A system (16) for generating a supercontinuum, comprising:
a frequency comb generator (15); and
a waveguide structure (9) coupled to the frequency comb generator (15) and comprising:
an untapered input section (1) with specified first cross-sectional outer dimensions (8, 8a, 8b), a down-taper transition section (2) leading to a taper waist section (3) with second cross-sectional outer dimensions (7, 7a, 7b) that are smaller than the first cross-sectional outer dimensions (8, 8a, 8b), followed by an up-taper transition section (4) extending to an untapered output section (5) which reverts to third cross-sectional outer dimensions (6, 6a, 6b) that are larger than the second cross-sectional outer dimensions (7, 7a, 7b), wherein the input section (1) is configured to have an anomalous dispersion regime and at least one normal dispersion regime, and the taper waist section (3) is configured to have only a normal dispersion regime over a wavelength range critical for the supercontinuum generation.

2. The system (16) according to claim 1, wherein the third cross-sectional outer dimensions (6, 6a, 6b) are substantially the same as the first cross-sectional outer dimensions (8, 8a, 8b), within a tolerance of +/-10 %.

3. The system (16) according to claim 1 or 2, wherein the down-taper transition section (2) and the up-taper transition section (4) each have a length between 5 cm and 15 cm when the waveguide structure (9) is implemented as a microstructured optical fiber, MOF, or each have a length between 3 mm and 30 mm when the waveguide structure (9) is implemented as a waveguide on a planar substrate structure (14), in particular a photonic integrated circuit, PIC.

4. The system (16) according to any one of claims 1 to 3, wherein the waveguide structure (9) is configured as a tapered microstructured fiber, the untapered input section (1) preferably having a core diameter in a range of about 3 µm to 5 µm.

5. The system (16) according to any one of claims 1 to 4, wherein the untapered input section (1) has two zero dispersion wavelengths ZDW1 and ZDW2, with ZDW1 located within a wavelength range of about 900 nm ± 40 nm and ZDW2 located at a wavelength larger than 2000 nm, thereby establishing an anomalous dispersion regime between the zero dispersion wavelengths ZDW1 and ZDW2.

6. The system (16) according to claim 5, wherein the waveguide structure (9) is configured for use with a pump source (18), said pump source (18) being an ultrashort pulse laser, and the wavelength of the ultrashort pulse laser is situated within the anomalous dispersion range established between the zero dispersion wavelengths ZDW1 and ZDW2.

7. The system (16) according to claim 5 or 6, wherein the down-taper transition section (2) is configured such that the zero dispersion wavelengths ZDW1 and ZDW2 progressively blue-shift until they both vanish, facilitating complete supercontinuum generation within this section (2) and yielding a spectrum free of strong modulation.

8. The system (16) according to any one of claims 1 to 7, wherein the length of the down-taper transition section (2) is configured to generate a flat supercontinuum spectral envelope.

9. The system (16) according to any one of claims 1 to 8, wherein the taper waist section (3) is devoid of a zero dispersion wavelength, enabling the transmission of optical signals without substantial changes in their spectral characteristics.

10. The system (16) according to any one of claims 1 to 9, wherein the taper waist section (3) has a variable length, specifically adapted to optimize supercontinuum generation for different spectral requirements.

11. The system (16) according to any one of claims 1 to 10, wherein the up-taper transition section (4) is configured to ensure consistent transmission of the supercontinuum, maintaining spectral integrity irrespective of the presence or absence of zero dispersion wavelengths within the up-taper transition section (4).

12. The system (16) according to any one of claims 1 to 11, wherein the length of the up-taper transition section (4) is specifically selected to either be the same as or different from the length of the down-taper transition section (2), thereby enabling customized taper configurations.

13. The system (16) according to any one of claims 5 to 12, wherein the untapered output section (5) reinstates the two zero dispersion wavelengths ZDW1 and ZDW2 as in the untapered input section (1), ensuring consistent transmission characteristics for the supercontinuum generated in the waveguide structure (9).

14. The system (16) according to any one of claims 1 to 13, wherein the waveguide structure (9) is enveloped with an index-matching material (17) to mitigate damage when operated with a high-repetition-rate GHz pump source (18) at high average powers exceeding 1 W.

15. A method for generating a supercontinuum utilizing the system (16) according to any one of claims 1 to 14, the method comprising the steps of: coupling light from the frequency comb generator (15) into the untapered input section (1) of the waveguide structure (9), and collecting the resulting supercontinuum output from the untapered output section (5), wherein the generated supercontinuum exhibits a spectral width of at least 500 nm, extending over an octave, such as from 500 nm to 1600 nm, when the waveguide structure (9) is pumped with a laser having a central wavelength approximately around 1 µm, or from 900 nm to 2400 nm, when the waveguide structure (9) is pumped with a laser (15) having a central wavelength approximately around 1,5 µm.
